# EUROPÄISCHE PATENTSCHRIFT

(11) **EP 0 440 978 B1**
(45) Veröffentlichungstag und Bekanntmachung des Hinweises auf die Patenterteilung: **25.01.1995**
(21) Anmeldenummer: 90125368.2
(22) Anmeldetag: 22.12.1990
(51) Int. Cl.: A01D 41/12, B65G 65/46

(54) **Mähdrescher**
Combine harvester
Moissonneuse-batteuse

(43) Veröffentlichungstag der Anmeldung: 14.08.1991
(73) Patentinhaber: SAME S.p.A., I-24047 Treviglio (Bergamo) (IT)
(72) Erfinder: Hönl, Josef, W-8882 Lauingen (DE)
(74) Vertreter: Nau, Walter, Dipl.-Ing.

(56) Entgegenhaltungen:
- EP-A- 0 274 761
- FR-A- 1 540 299
- FR-A- 2 013 026
- FR-A- 2 263 679
- FR-A- 2 308 521
- US-A- 3 108 703
- US-A- 3 503 533
- US-A- 4 029 228

## Beschreibung

Die Erfindung betrifft einen Mähdrescher mit einer Mähvorrichtung, einem sich daran anschließenden Förderband für das geschnittene Erntegut, einer Dreschanordnung mit Kornabscheidevorrichtung für das Erntegut, einer Siebanordnung, einem Korntank zur Aufnahme der ausgedroschenen Körner und einem Körnerelevator, der aus einem im wesentlichen zylindrischen Füllrohr und einer in diesem Füllrohr angeordneten Transportschnecke besteht.

Bei einem derartigen Mähdrescher wird das geerntete Gut, z.B. Getreide, von einer Haspel erfaßt und nach dem Mähvorgang über den Förderer der Dreschanordnung zugeführt, in der die Körner abgeschieden werden. Das ausgedroschene Stroh wird dann über einen Hordenschüttler und mehrere Steilstufen dem rückwärtigen Ende des Mähdreschers zugeführt. Die ausgedroschenen Körner sowie die Spreu und nicht ausgedroschene Ähren gelangen von der Kornabscheidevorrichtung auf einen Vorbereitungsboden, von dem aus sie einer Siebanordnung zugeführt werden. Vor der Siebanordnung, die durch eine geeignete Schüttelanordnung in Schwingungen versetzt wird, ist ein Gebläse angeordnet, um die Körner von der Spreu und der sogenannten Überkehr zu trennen.

Die kleinen verhältnismäßig schweren Körner fallen dabei durch die Siebanordnung und werden über den Körnerelevator dem Korntank zugeführt, während die leichtere Spreu über das rückwärtige Ende der Siebanordnung hinaus weggeblasen wird.

Während des Ernteeinsatzes füllt sich langsam und kontinuierlich der Korntank, so daß es von Zeit zu Zeit erforderlich ist, festzustellen, welche Höhe die Kornmenge im Korntank erreicht hat, um so rechtzeitig den Mähvorgang unterbrechen zu können und den Korntank zu entleeren.

Bei den herkömmlichen Mähdreschern durchsetzt der aus dem zylindrischen Füllrohr und der in ihm angeordneten Transportschnecke bestehende Körnerelevator eine der Seitenwände des Korntanks unter einem Winkel zur Senkrechten, wobei das obere offene Ende des Füllrohrs sich fast bis zur oberen waagrechten Abdeckung des Korntanks erstreckt und etwa den gleichen Abstand von den beiden Seitenwänden aufweist. Bei sich kontinuierlich füllendem Korntank entsteht dabei ein Schüttkegel, dessen Spitze durch die Lage des unverrückbar angeordneten oberen Endes des Füllrohrs bestimmt ist. Eine vollständige Ausnutzung des Korntankvolumens ist mit diesen herkömmlichen Körnerschnecken nicht möglich.

So zeigt die US-A-4,029,228 einen beweglichen Abschnitt eines Füllrohres, das derart ausgebildet ist, daß lediglich eine Auf- bzw. Abbewegung zum Ausgleich unterschiedlicher Füllhöhen möglich ist. Eine Hin- und Herbewegung in und entgegesetzt zur Fahrtrichtung des Mähdreschers ist nicht ausführbar, da der bewegliche Abschnitt des Füllrohres über ein Gelenk an einer Hin- und Herbewegung in Fahrtrichtung des Mähdreschers gehindert ist. Hinweise auf die Vermeidung einer Entstehung eines Schüttkegels sind in diesem Dokument nicht gemacht.

Weiterhin ist aus der EP-A-0 274 761 ein Mähdrescher bekannt mit einer Mähvorrichtung, mit einem sich daran anschließenden Förderer für das geschnittene Erntegut, mit einer Dreschanordnung mit Komabscheidevorrichtung für das Erntegut, sowie einer Siebanrodnung, einem Korntank zur Aufnahme der ausgedroschenen Körner und einem Körerelevator, der aus einem im wesentlichen zylindrischen Füllrohr und einer in diesem Füllrohr angeordneten Transportschnecke besteht, wobei wenigstens ein Abschnitt des Füllrohres beweglich gelagert ist.

Aufgabe der vorliegenden Erfindung ist es, einen Mähdrescher dahingehend zu verbessern, daß bei gleicher Korntankgröße eine größere Menge an Erntegut als bisher möglich vom Korntank aufgenommen wird, bevor eine Entleerung notwendig wird, so daß die spezifische Flächenleistung eines derartigen Mähdreschers erhöht wird.

Ausgehend von einem Mähdrescher der eingangs näher genannten Art wird zur Lösung dieser Aufgabe vorgeschlagen, daß der beweglich Abschnitt des Füllrohres in den Korntank ragt und um eine die Längsachse des Füllrohrs schneidende und im wesentlichen senkrecht zu ihr verlaufende Achse derart verschwenkbar, daß er eine. Hin- und Herbewegung in und entgegengesetzt zur Fahrtrichtung des Mähdreschers ausführen kann; dabei ist es auch möglich, daß der bewegliche Abschnitt um zwei senkrecht aufeinander stehende, die Längsachse des Füllrohrs schneidende Achsen derart verschwenkbar ist, daß er zusätzlich eine Auf- und Abwegung ausführen kann.

Bei einem anderen vorteilhaften Ausführungsbeispiel ist der Abschnitt entlang des Umfangs des Füllrohrs drehbar angeordnet, wobei er bei einem weiteren Ausführungsbeispiel zusätzlich um eine die Längsachse des Füllrohrs schneidende Achse derart verschwenkbar sein kann, daß er außerdem eine Auf- und Abbewegung ausführen kann.

Der feststehende Abschnitt des Füllrohrs kann mit dem beweglichen Abschnitt des Füllrohrs entweder über Schrägscheiben, Drehgelenke oder Drehkränze verbunden sein, wobei als Verstellvorrichtung für den beweglichen Abschnitt eine mechanische, eine hydraulische oder eine elektrische Vorrichtung in Frage kommen.

Mit einem derartig ausgestalteten Mähdrescher wird der Vorteil erzielt, daß während des Befüllens des Korntanks kein ausgeprägter Schüttkegel unterhalb des oberen Endes des Körnerelevators mehr auftritt, sondern daß durch dessen Verschwenken in einer oder in zwei aufeinander senkrecht stehenden Richtungen der Korntank gleichmäßig bis in die Ecken hinein gefüllt wird, so daß eine größere Menge an Erntegut aufgenommen werden kann, bevor ein Entleerungsvorgang und damit
ein Stillstand der Maschinen erforderlich ist.

Im folgenden wird die Erfindung anhand der Zeichnung näher erläutert, in der zwei Ausführungsbeispiele dargestellt sind. Es zeigen:
Fig. 1 ein erstes Ausführungsbeispiel eines beweglichen Abschnitts eines Körnerelevators;
Fig. 2 ein zweites Ausführungsbeispiel eines derartigen Körnerelevators.

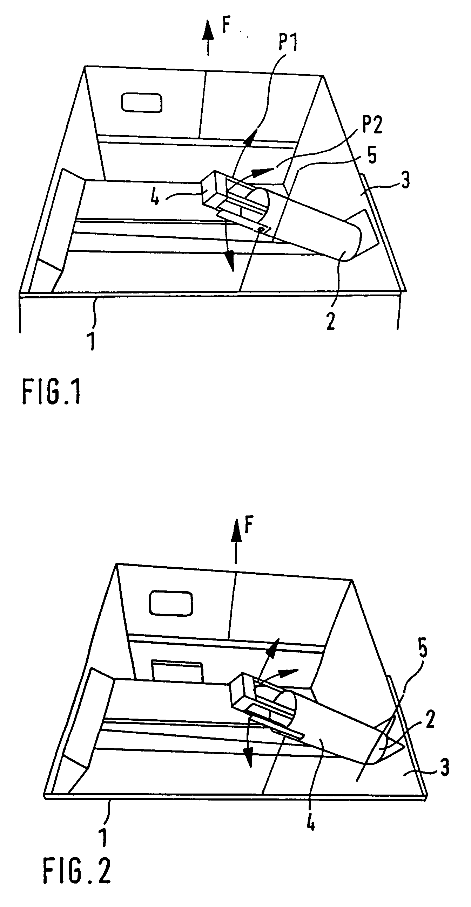

Fig. 1 zeigt perspektivisch einen Draufblick auf einen oben offenen Korntank eines Mähdreschers, wobei die Fahrtrichtung mit dem Pfeil F angedeutet ist. Die eine Seitenwand 3 wird dabei von einem unter einem Winkel zur Senkrechten angeordneten Körnerelevator durchsetzt, der aus einem im wesentlichen zylindrischen Füllrohr und einer in diesem Füllrohr angeordneten Transportschnecke besteht. Der Körnerelevator führt das von der Dreschvorrichtung ausgedroschene Erntegut dem Inneren des Korntanks zu.

Erfindungsgemäß ist nun der obere Abschnitt 4 des Füllrohrs verschwenkbar angeordnet und über eine Gelenkstelle 5 mit dem feststehenden Abschnitt 2 des Füllrohrs verbunden. Die Verschwenkvorrichtung kann dabei derart ausgestaltet sein, daß diese am oberen Abschnitt 4 bei einer einfachen Ausübung nur eine etwa in Fahrtrichtung F und entgegengesetzt zur Fahrtrichtung erfolgende Schwenkbewegung gemäß dem Pfeil P1 ausführen kann oder aber auch so ausgeführt sein kann, daß er zusätzlich dazu eine zweite Schwenkbewegung in einer im wesentlichen senkrechten Ebene zur Fahrtrichtung F gemäß dem Pfeil P2 ausführen kann. In jedem Fall erfolgt eine gleichmäßige Befüllung des Korntanks, da ein zentraler Schüttkegel unterhalb der Öffnung des oberen Abschnitts 4 des Füllrohrs entfällt und die Ecken dadurch vollständig ausgefüllt werden können.

Fig. 2 zeigt ein etwas abgewandeltes Ausführungsbeispiel, bei dem der gesamte in den Korntank 1 ragende Abschnitt 4 des Füllrohrs verschenkbar ausgebildet ist, wobei mit 5 eine Verschwenkachse angedeutet ist, so daß dieser Abschnitt 4 eine im wesentlichen in Fahrtrichtung liegende Hin- und Herbewegung ausführen kann. Die Verbindung des beweglichen Abschnitts 4 mit dem feststehenden Abschnitt 2 kann bei diesem Ausführungsbeispiel über an und für sich bekannte Drehgelenke, Schrägscheiben oder Drehkränze entsprechend der Schräge folgen, wobei diese Konstruktionen von den Korntank-Entleerungsvorrichtungen bekannt sind.

Eine Verstellung des beweglichen Abschnitts kann dabei mechanisch mittels eines Gelenkhebels oder hydraulisch mit einem Zylinder oder elektrisch mit einem Spindelmotor erfolgen. Es ist ferner möglich, die Betätigung dadurch zu automatisieren, daß eine Füllstandsanzeige mit Sensoren vorgesehen wird, so daß bei Erreichen einer bestimmten Füllhöhe automatisch über eine geeignete Regel- und Ansteuerungstechnik ein Verschwenken des beweglichen Abschnitts 4 erfolgt. Dabei ist es besonders vorteilhaft, wenn der Schwenkvorgang vom Anfangspunkt bis zum Endpunkt in nur eine Richtung während des Füllvorgangs erfolgt. Dadurch wird vermieden, daß bei steigendem Füllungsgrad das Füllrohr gegen das Erntegut drückt.

## Patentansprüche

1. Mähdrescher mit einer Mähvorrichtung, einem sich daran anschließenden Förderer für das geschnittene Erntegut, einer Dreschanordnung mit Kornabscheidevorrichtung für das Erntegut, einer Siebanordnung, einem Korntank (1) zur Aufnahme der ausgedroschenen Körner und einem Körnerelevator, der aus einem im wesentlichen zylindrischen Füllrohr und einer in diesem Füllrohr angeordneten Transportschnecke besteht, wobei wenigstens ein Abschnitt des Füllrohres beweglich gelagert ist, *dadurch gekennzeichnet,* daß der bewegliche Abschnitt (4) des Füllrohres in den Korntank ragt und um eine die Längsachse des Füllrohres schneidende und im wesentlichen senkrecht zu ihr verlaufende Achse derart verschwenkbar ist, daß er eine Hin- und Herbewegung in und entgegengesetzt zur Fahrtrichtung des Mähdreschers ausführen kann.

2. Mähdrescher nach Anspruch 1, dadurch gekennzeichnet, daß der Abschnitt (4) um zwei die Längsachse des Füllrohrs schneidende aufeinander senkrecht stehende und im wesentlichen senkrecht zu ihr verlaufende Achsen derart verschwenkbar ist, daß er zusätzlich eine Auf- und Abbewegung ausführen kann.

3. Mähdrescher nach einem der vorhergehenden Ansprüche, dadurch gekennzeichnet, daß der bewegliche Abschnitt (4) mit dem feststehenden Abschnitt über ein Drehgelenk verbunden ist.

4. Mähdrescher nach einem der vorhergehenden Ansprüche, dadurch gekennzeichnet, daß der bewegliche Abschnitt (4) mit dem feststehenden Abschnitt über Schrägscheiben verbunden ist.

5. Mähdrescher nach einem der vorhergehenden Ansprüche, dadurch gekennzeichnet, daß der bewegliche Abschnitt (4) mit dem feststehenden Abschnitt über einen Drehkranz verbunden ist.

6. Mähdrescher nach einem der vorhergehenden Ansprüche, dadurch gekennzeichnet, daß der bewegliche Abschnitt (4) mit einer mechanischen Verstellvorrichtung verbunden ist.

7. Mähdrescher nach einem der vorhergehenden Ansprüche, dadurch gekennzeichnet, daß der bewegliche Abschnitt (4) mit einer hydaulischen Verstellvorrichtung verbunden ist.

8. Mähdrescher nach einem der vorhergehenden Ansprüche, dadurch gekennzeichnet, daß der bewegliche Abschnitt (4) mit einer elektrischen Verstellvorrichtung verbunden ist.

## Claims

1. A combine harvester with a reaping device, a conveyor connected thereto for the cut harvested crop, a threshing device with a grain separating device for the harvested crop, a sieve, a grain tank (1) to accommodate the clean grain and a grain elevator which comprises a substantially cylindrical charging pipe and a screw conveyor arranged in this charging pipe, with at least a section of the charging pipe mounted so that it is movable, *characterised in that* the movable section (4) of the charging pipe projects into the grain tank and can be swivelled about an axis transecting the longitudinal axis of the charging pipe and extending substantially at right angles to it such that it can execute a to and fro movement in the direction of travel of the combine harvester and counter to that direction.

2. A combine harvester according to claim 1, characterised in that the section (4) can be swivelled about two axes at right angles to each other and transecting the longitudinal axis of the charging pipe and extending substantially at right angles to it such that it can execute an additional up and down movement.

3. A combine harvester according to either one of the preceding claims, characterised in that the movable section (4) is connected to the fixed section via a swivel joint.

4. A combine harvester according to any one of the preceding claims, characterised in that the movable section (4) is connected to the fixed section via oblique discs.

5. A combine harvester according to any one of the preceding claims, characterised in that the movable section (4) is connected to the fixed section via a pivoted bogie.

6. A combine harvester according to any one of the preceding claims, characterised in that the movable section (4) is connected to a mechanical adjusting device.

7. A combine harvester according to any one of the preceding claims, characterised in that the movable section (4) is connected to a hydraulic adjusting device.

8. A combine harvester according to any one of the preceding claims, characterised in that the movable section (4) is connected to an electrical adjusting device.

## Revendications

1. Moissonneuse-batteuse comportant un dispositif de fauche, suivi d'un convoyeur pour le produit de récolte coupé, un dispositif de battage avec un dispositif séparateur de grains pour le produit de récolte, un dispositif à tamis, un réservoir à grains (1) pour recevoir les grains de battage et un élévateur à grains composé essentiellement d'un tube de remplissage cylindrique recevant une vis transporteuse, au moins un segment du tube de remplissage étant mobile, caractérisée en ce que le segment mobile (4) du tube de remplissage pénètre dans le réservoir à grains et peut pivoter autour d'un axe coupant l'axe longitudinal du tube de remplissage d'une manière essentiellement perpendiculaire à cet axe, pour effectuer un mouvement de va et vient dans la direction de déplacement et dans la direction opposée de la moissonneuse-batteuse.

2. Moissonneuse-batteuse selon la revendication 1, caractérisée en ce que le segment (4) peut pivoter autour de deux axes coupant l'axe longitudinal du tube de remplissage, et qui sont perpendiculaires et essentiellement perpendiculaires à l'axe du tube, pour effectuer en outre un mouvement de montée et de descente.

3. Moissonneuse-batteuse selon l'une des revendications précédentes, caractérisée en ce que le segment mobile (4) est relié au segment fixe par une articulation de rotation.

4. Moissonneuse-batteuse selon l'une des revendications précédentes, caractérisée en ce que le segment mobile (4) est relié au segment fixe par des disques en biais.

5. Moissonneuse-batteuse selon l'une des revendications précédentes, caractérisée en ce que le segment mobile (4) est relié au segment fixe par une couronne de rotation.

6. Moissonneuse-batteuse selon l'une des revendications précédentes, caractérisée en ce que le segment mobile (4) est relié à un dispositif de réglage mécanique.

7. Moissonneuse-batteuse selon des revendications précédentes, caractérisée en ce que le segment mobile (4) est relié à un dispositif de réglage hydraulique.

8. Moissonneuse-batteuse selon l'une des revendications précédentes, caractérisée en ce que le segment mobile (4) est relié à un dispositif de commande électrique.
